# EUROPÄISCHE PATENTANMELDUNG

(11) **EP 3 554 050 A1**
(43) Veröffentlichungstag der Anmeldung: **16.10.2019**
(21) Anmeldenummer: 18166362.6
(22) Anmeldetag: 09.04.2018
(51) Int. Cl.: H04L 29/08, G06F 3/06

(54) **VERFAHREN ZUM SICHERN EINER AUTOMATISIERUNGSKOMPONENTE**

(71) Anmelder: Siemens Aktiengesellschaft, 80333 München (DE)
(72) Erfinder: Schlichtner, Marc, 91080 Spardorf (DE)

(57) **Zusammenfassung**

Verfahren zum Sichern von einer Automatisierungskomponente (D1, D2, DN) zugeordneten Komponentendaten, wobei die Komponentendaten an wenigstens einen Teil von Rechenknoten eines verteilten Registers (BN1, BN2, BN3) übertragen werden, wobei das verteilte Register (BN1, BN2, BN3) zur Authentifizierung der Komponentendaten, vorzugsweise von Komponentendaten mehrerer Automatisierungskomponenten (D1, D2, DN), dient.

## Beschreibung

Die Erfindung betrifft ein Verfahren zum Sichern einer Automatisierungskomponente und eine Vorrichtung umfassend wenigstens eine Automatisierungskomponente. Ferner bezieht sich die vorliegende Offenbarung auf entsprechende Computerprogramme.

Im Rahmen eines Automatisierungssystems werden in der Regel Daten in und aus verschiedensten Automatisierungskomponenten übertragen. Bei den Automatisierungskomponenten kann es sich beispielsweise um speicherprogrammierbare Steuerungen, numerische Steuerungen, Feldbuskomponenten der dezentralen Peripherie oder auch Feldgeräte handeln. Die Daten, beispielsweise Identifikationsinformationen oder Parametrierungsdaten sowie Betriebsdaten, welche fest auf der jeweiligen Automatisierungskomponente gespeichert sind, sind in der Regel über eine direkte, elektrische Verbindung, beispielsweise Profibus oder Ethernet übertragbar. Eine drahtlose Übertragung von Daten ist auch über W-LAN oder andere drahtlose Industrieprotokolle, wie bspw. WirelessHART, möglich.

Heutzutage werden Automatisierungssysteme und/oder Automatisierungskomponenten wie bspw. Automatisierungsgeräte, Applikationen, Anlagen über nur bedingt fälschungssichere und proprietäre Identifikationsmechanismen, wie z.B. Seriennummern, gekennzeichnet und in unterschiedlichen, herstellerspezifischen Datenbanken abgelegt (z.B. in einer zentralen Datenbank und/oder vermittels einer Software wie bspw. "Teamcenter" der Firma SIEMENS). Zudem haben die viele Automatisierungssysteme und/oder Automatisierungskomponenten keinerlei Verbindung über Kommunikationsnetzwerke im Sinne des IoT (Internet-Of-Things), und die Daten sind daher in der Regel nicht aktuell sondern basieren auf historischen Ständen. Darüber hinaus sind die Daten sehr limitiert (z.B. Typenschild), statisch und/oder "leicht" manipulierbar.

Eine oder mehrere Automatisierungskomponenten können eine oder mehrere Einzelteile umfassen (bei welchen Einzelteilen es sich um eine oder mehrere Automatisierungskomponenten handeln kann). Applikationen können eine oder mehrere Automatisierungskomponenten umfassen und schlussendlich kann eine oder mehrere Anlagen Automatisierungskomponenten und Applikationen umfassen.

Mit der heutigen Lösung von z.B. Seriennummern, Stücklisten, und/oder "as-built"-Informationen in proprietären und geschlossenen Systemen lässt sich über Hersteller, Liefer- und Betriebsketten hinweg keine einheitlichen übergreifenden Informationen ableiten. Information zur z.B. Rückverfolgung von Automatisierungskomponenten ist nur schwer möglich. Fälschungssicherheit ist für einen Abnehmer der Automatisierungskomponente nicht mehr sicherzustellen, wenn er über die Lieferkette hinweg keine komplette Systemtransparenz, sowie Zugriffsmöglichkeit hat. Zudem können sich kleine Hersteller Systeme zur Fälschungssicherung oder Rückverfolgung nicht leisten. Sollten Sie von Abnehmern gezwungen werden diese Informationen bereitzustellen, entstehen ihnen häufig Kosten, die kaum noch beherrschbar sind. Das grundsätzliche technische Problem hierbei ist, dass die heutigen Systeme geschlossene, oft heterogene Systeme sind, die eine übergreifende-, hersteller- und systemunabhängige Zusammenarbeit nicht zulassen und auch in der Hoheit einzelner Partner liegen.

Darüber hinaus werden die Änderungen an einer oder mehreren Automatisierungskomponente von der Herstellung des kleinsten Elements bis zum Betrieb in der entsprechenden Applikation nicht nachvollziehbar abgelegt. Dazu kommen die hohen Kosten einer derartigen Lösung, sowohl für die Investitions- als auch für die Betriebsphase. Einige Abnehmer zwingen Hersteller dazu, eine durchgängige Dokumentation der Lieferkette bereitzustellen, die jedoch wieder in proprietären Systemen landet und bei Änderungen nicht aktualisiert werden kann. Es gibt auch diverse, Zertifikat-basierte Fälschungssicherungslösungen jedoch ohne jegliche Integration in ein übergeordnetes System.

Ferner verwenden Hersteller Internet-of-Things-(IoT)basierte oder Cloud-basierte Lösungen, um Datenlücken zu schließen. Diese Kette zur Erfassung von Daten einer Automatisierungskomponente startet jedoch nicht schon bei dem Design und der Produktion einer Automatisierungskomponente sondern häufig erst im Betrieb. Bei derartigen Zentrallösungen ist ein belastbarer und aktueller Datenbestand jedoch nicht gewährleistet oder nur sehr eingeschränkt möglich und es ist unabdingbar, dass der zentralen Instanz vollstes Vertrauen entgegen gebracht wird.

Es ist daher Aufgabe eine vorteilhafte, die oben genannten Nachteile überwindende Lösung zu schaffen.

Die Aufgabe wird durch ein Verfahren zum Sichern von einer Automatisierungskomponente zugeordneten Komponentendaten gelöst, wobei die Komponentendaten an wenigstens einen Teil von Rechenknoten eines verteilten Registers übertragen werden, wobei das verteilte Register zur Authentifizierung der Komponentendaten, vorzugsweise von Komponentendaten mehrerer Automatisierungskomponenten, dient.

Die Aufgabe wird ferner durch eine Vorrichtung umfassend wenigstens eine Automatisierungskomponente gelöst, wobei der Automatisierungskomponente Komponentendaten zugeordnet sind und die Vorrichtung dazu ausgelegt ist, die Komponentendaten an wenigstens einen Teil von Rechenknoten eines verteilten Registers zu übertragen, wobei das verteilte Register zur Authentifizierung der Komponentendaten, vorzugsweise von Komponentendaten mehrerer Automatisierungskomponenten, dient.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden.

Die Erfindung wird anhand der nachfolgenden Zeichnungen näher erläutert.
- FIG 1: zeigt eine schematische Darstellung einer industriellen Anlage mit mehreren Automatisierungskomponenten,
- FIG 2: zeigt eine schematische Darstellung einer weiteren Ausführungsform eines Automatisierungssystems,

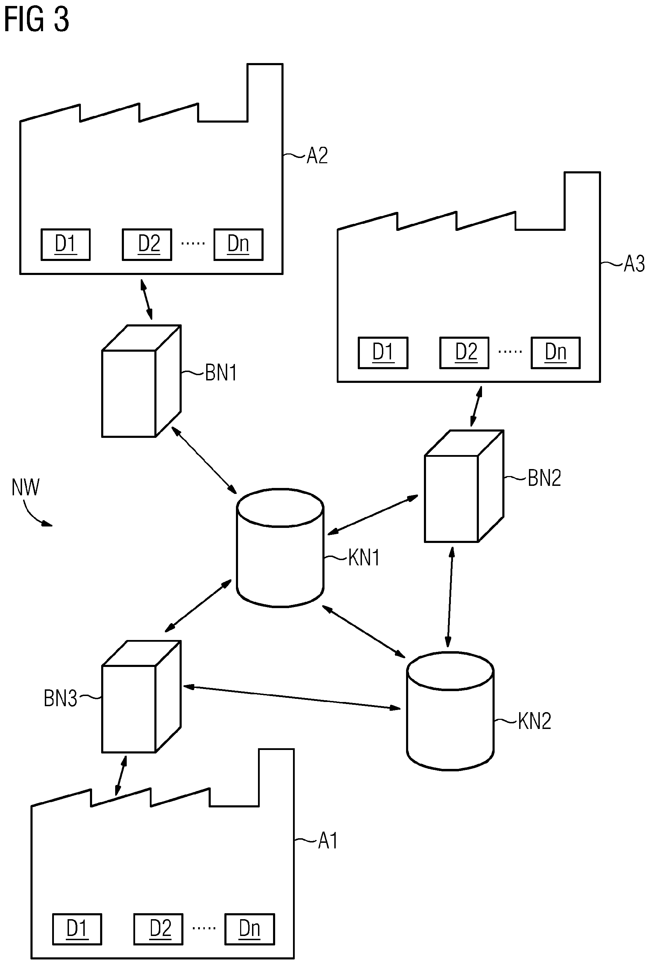

- FIG 3: zeigt eine schematische Darstellung mehrerer Automatisierungssysteme sowie eines Netzwerks umfassend mehrere Netzwerkknoten, die ein verteiltes Register bilden,
- FIG 4: zeigt eine schematische Darstellung zum Schreiben und/oder Lesen von Komponentendaten einer Automatisierungskomponente,
- FIG 5: zeigt eine Ausführungsform umfassend mehrere Verfahrensschritte.

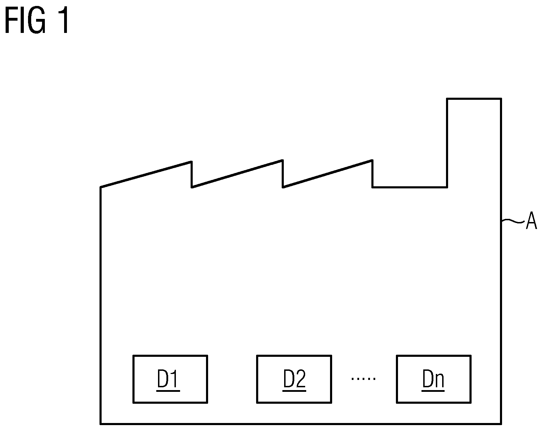

FIG 1 zeigt eine schematische Darstellung einer industriellen Anlage A. Eine industrielle Anlage A kann dabei bspw. mehrere Automatisierungskomponenten D1, D2, ..., Dn umfassen, die gemeinsam oder einzeln zur Durchführung eines in der Anlage A ablaufenden, bspw. automatisierten, Prozesses dienen. Bei einem Automatisierungskomponente D1 kann es sich bspw. um einen Sensor oder einen Aktor handeln. Vermittels der Automatisierungskomponenten D1 kann bspw. ein Automatisierungsprozess ausgeführt werden oder die Automatisierungskomponente D1 kann zum Ausführen zumindest eines Teils eines Automatisierungsprozesses dienen.

Von einem oder mehreren der Automatisierungskomponenten D1, D2,..., Dn können Daten, wie bspw. Messwerte oder sonstige Zustandswerte, übermittelt werden. Zu diesem Zweck kann bspw. eine Automatisierungskomponente D1 eine entsprechende Kommunikationsschnittstelle, nicht gezeigt, aufweisen, die dem Empfang und/oder der Übertragung von Komponentendaten dient. Die von einer Automatisierungskomponente D1 stammenden Daten können bspw. von einer Steuer- und/oder Regeleinheit empfangen werden, welche bspw. dazu dient, den in der Anlage ablaufenden Prozess zu steuern und/oder zu regeln. Zusätzlich oder alternativ können die Daten an eine Auswerteeinheit übertragen werden, die dazu dient, ein oder mehrere Automatisierungskomponenten und/oder den in der Anlage ablaufenden Prozess zu überwachen. Bspw. kann es sich dabei um eine (softwarebasierte) Lösung zur vorrausschauenden Wartung handeln.

In Automatisierungssystemen, wie bspw. in FIG 1 dargestellt, werden vielfach Komponenten, wie bspw. Feldgeräte eingesetzt, die zur Erfassung und/oder Beeinflussung von Prozessgrößen dienen. Zur Erfassung von Prozessgrößen können bspw. Messgeräte dienen, wie beispielsweise Füllstandsmessgeräte, Durchflussmessgeräte, Druck- und Temperaturmessgeräte, pH-Messgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Zur Beeinflussung der Prozessgrößen können Aktoren verwendet werden, wie Ventile oder Pumpen, über die z.B. der Durchfluss einer Flüssigkeit in einer Rohrleitung oder der Füllstand eines Mediums in einem Behälter geändert wird.

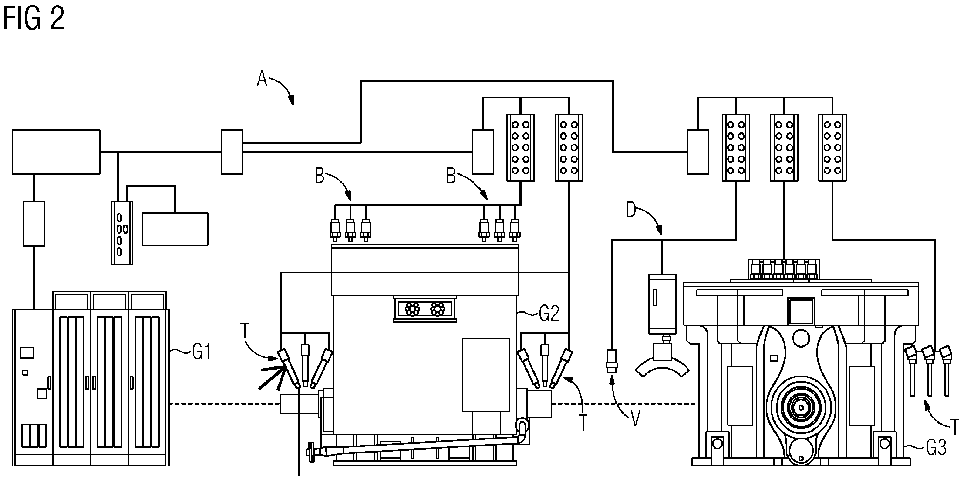

Eine weitere Ausführungsform eines Automatisierungssystems ist in FIG 2 gezeigt. Die dort gezeigte Anlage umfasst als Automatisierungskomponenten eine Steuerung G1, einen Motor G2 und ein Getriebe G3, wobei sowohl am Motor G2 als auch am Getriebe G3 mehrere Sensoren, wie bspw. Temperatursensoren T, Beschleunigungssensoren B und Drehmomentsensoren D, sowie ein Geschwindigkeitsensor V vorgesehen sind.

Wie oben beschrieben, können die Automatisierungskomponenten Komponentendaten enthalten. Zur Authentifizierung dieser Komponentendaten wird ein verteiltes, digitales, fälschungssicheres, und vorzugsweise jederzeit aktuelles, verteiltes Register vorgeschlagen. Dieses lässt sich bspw. durch eine verteilte Datenbank realisieren. Das verteilte Register kann bspw. einen oder mehrere digitale Zwillinge der Automatisierungskomponenten enthalten. Bei dem digitalen Zwilling kann es sich um ein Datenmodell der Automatisierungskomponente handeln. Ein digitaler Zwilling kann ein oder mehrere Codeobjekte mit Parametern und Dimensionen der Parameter und Dimensionen des physikalischen Zwillings umfassen. Ein oder mehrere digitale Zwillinge können z.B. verwendet werden, um Herstellern dynamische, strukturierte Daten bezüglich dem Betrieb ihrer Automatisierungskomponenten, insbesondere unter Verwendung von vollständigen Produktlebenszyklus-Daten und/oder Simulationsmodellen, bereitzustellen. Dadurch können Designer, Hersteller und Wartungsdienstleister miteinander für bessere Qualitätsprodukte und effektivere Wartungsergebnisse interagieren. Ein digitaler Zwilling kann dabei Identifikationsdaten, die einer eindeutigen physischen Automatisierungskomponente entsprechen, ein oder mehrere Simulationsmodelle und eine Datenbank umfassen.

Bspw. können alle Automatisierungskomponenten bzw. die zugehörigen Komponentendaten eines Anlagenbetreibers, bspw. einer der in FIG 1 oder 2 gezeigten Anlagen, in dem verteilten Register gespeichert sein. Dabei kann es sich bspw. um die Komponentendaten handeln, die dazu dienen, Automatisierungskomponenten in einer oder mehreren Anlagen zu identifizieren. Idealerweise werden diese Komponentendaten so automatisch gesammelt. Komponentendaten können Informationen für Servicetechniker oder anderer Mitarbeiter liefern. Bspw. kann anhand der Komponentendaten identifiziert werden, wo bestimmte Automatisierungskomponenten oder -systeme fehlerhaft betrieben werden.

Gemäß einer Ausführungsform können mehrere Automatisierungskomponenten D1, D2,... Dn über ein Netzwerk mit verschiedenen Netzwerkknoten BN1, BN2, BN3, die ein verteiltes Register bilden, verbunden sein. Im Netzwerk können sich noch weitere Knoten KN1, KN2 befinden, die nicht Teil des verteilten Registers sind, Über das Netzwerk NW kann ein Austausch von Komponentendaten, bspw. in Form von Datenblöcken, erfolgen. Änderungen von Komponentendaten können dann vermittels sog. Transaktionen erfolgen. Ein oder mehrere der Knoten BN1, BN2, BN3 können für das Speichern der Komponentendaten, insbesondere in Form der o.g. Datenblöcke dienen. Die Bildung von Transaktionsdaten kann durch eine Automatisierungskomponenten D1 bis Dn und/oder durch einen der Knoten BN1, BN2, BN3 erfolgen. Das Bilden der Transaktionsdaten mehrerer Automatisierungskomponenten D1 bis Dn in einem Automatisierungssystem kann durch übergeordnete Knoten BN1, BN2, BN3 zentral erfolgen. Die Transaktionsdaten können, bspw. in Form von Datenblöcken, erzeugt werden, wenn ein oder mehrere Komponentendaten geändert werden. Insbesondere können Transaktionsdaten gebildet werden wenn bestimmte vorgegebenen Komponentendaten, wie bspw. Parametereinstellungen einer oder mehrerer Automatisierungskomponenten, geändert werden. Insbesondere können Transaktionsdaten beinhalten vorzugsweise stets Identifizierungsinformationen zur Identifizierung einer Automatisierungskomponente. Diese Transaktionsdaten können in einem sog. Tag, das bspw. einen Speicher enthält, gespeichert und ausgelesen werden.

Einzelne Automatisierungskomponenten D1 bis Dn oder zentrale Rechner eines Automatisierungssystem, die mit dem Netzwerk NW gekoppelt sind, können somit Transaktionsdaten an einen oder mehrere Knoten BN1, BN2, BN3 des verteilten Registers übertragen. Transaktionsdaten können insbesondere eine Identifizierungsinformation aufweisen, beispielsweise eine Maschinen-ID "Siemens SiXY SN3175438". Ferner können die Transaktionsdaten weitere Komponentendaten einer Automatisierungskomponente aufweisen. Die Transaktionsdaten können mittels eines öffentlichen Schlüssel einer Automatisierungskomponente signiert sein und zusätzlich mittels eines privaten Schlüssels der Automatisierungskomponente verschlüssel sein. Alternativ oder zusätzlich ist hier auch ein Hash-Wert denkbar.

Das Netzwerk NW, welches das verteilte Register beinhaltet, kann bspw. ein sog. peer-to-peer-Netzwerk sein. Das verteilte Register kann folglich auf einem auf einem Blockchain-Mechanismus basieren, bei dem ein Proof-of-Work von einem oder mehrere Knoten BN1, BN2, BN3 des Netzwerks NW ausgeführt wird. Der Proof-of-Work Nachweis kann dabei entsprechend der zur Verfügung stehenden Rechenleistung des Netzwerks NW gewählt werden. Der Alternativ kann bspw. ein Mechanismus der auf einem Proof-of-Stake-Mechanismus beruht, verwendet werden. Somit ist es möglich eine Manipulationssicherheit des verteilten Registers vermittels verschiedener Methoden zu gewährleisten.

Das verteilte Register kann z.B. für Automatisierungskomponenten, Applikationen, und/oder Anlagen auf einem Datenbanksystem basieren, dessen Integrität durch eine kryptographische Verkettung der entsprechenden Hash Werte (initial wie Veränderungen) des digitalen Zwillings gesichert ist (Chain). Dabei kann das verteilte Register vermittels einer cloud-basierten Software realisiert werden. Ferner können Komponentendaten in einem in einer Automatisierungskomponente enthaltenen oder zugeordneten Speicher realisiert werden.

Eine oder mehrere Automatisierungskomponenten können über ein oder mehrere Netzwerke mit dem verteilten Register verbunden sein. Über das Netzwerk ist sodann eine Übertragung der Komponentendaten möglich. Bspw. kann eine Automatisierungskomponente permanent mit dem Netzwerk verbunden sein, um Änderungen in dem verteilten Register speichern. Es kann somit ein stets verfügbarer und aktueller Digital Twin einer Automatisierungskomponente geschaffen. Darüber hinaus können Komponentendaten auch vor Ort, bspw. in o.g. Tag, abgelegt werden.

Die Zuordnung einer Automatisierungskomponente zu Komponentendaten, die bspw. zur Identifizierung der Automatisierungskomponente dienen, wird vorzugsweise zu einem sehr frühen Zeitpunkt realisiert, möglichst schon beim Design der Automatisierungskomponente, spätestens sobald die Automatisierungskomponente ein Werk verlässt. Jede Automatisierungskomponente, die eine Produktion verlässt, ist somit bereits Teil des verteilten Registers und mit einer fälschungssicheren Grundinformation ausgestattet. Eine oder mehrere Automatisierungskomponenten können somit ab Werk Teil eines kryptografisch gesicherten und verteilten Registers sein. Die initiale Befüllung der Komponentendaten wird somit dem verteilten Register zur Verfügung gestellt. Bei dieser sog. initialen Befüllung können Informationen die sich bspw. auf eine Stückliste, einen Softwarestand (Software-Version), eine Seriennummer, ein Produktionsdatum, einen Firmwarestand, einen Prüfberichte, einen oder mehrere Abnahmeberichte handeln.

Aus Komponentendaten kann vermittels des verteilten Registers, bspw. automatisch, ein initialer Datenblock, des zur Automatisierungskomponenten gehörenden digitalen Zwillings, vorzugsweise ein dazugehöriger eindeutiger Hash Wert, ermitteln werden. Der Hash Wert kann bspw. gespeichert und in dem verteilten Register abgelegt werden. Bei Veränderungen der Komponentendaten können bspw. die geänderten Komponentendaten als auch historische Komponentendaten, wie bspw. ein vorheriger Hash Wert, als Basis für die Berechnung des neuen Hash Wertes genutzt werden. Dadurch wird die Integrität der historischen Daten sichergestellt.

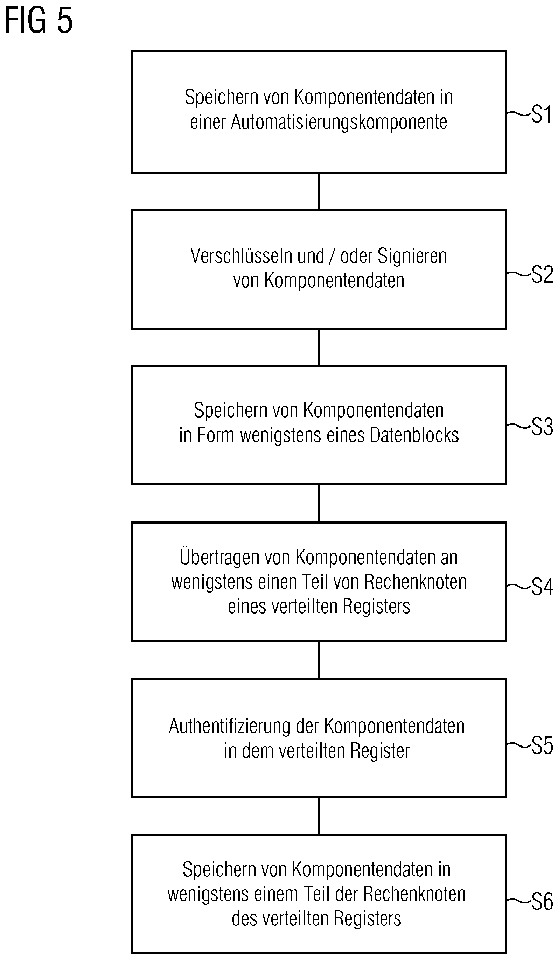

Eine oder mehrere Automatisierungskomponenten D1 bis Dn können Teilnehmer des Netzwerks NW sein. Wenn die Automatisierungskomponente in Betrieb ist, kann eine Verbindung zum Netzwerk NW eingerichtet sein. Diese Verbindung wird entweder direkt durch vernetze Automatisierungskomponenten oder über die Nutzung eines Schnittstellengerätes zur Verbindungsherstellung, wie in FIG 5 gezeigt, realisierbar (z.B. Reader, mobile Endgeräte, etc.). Bei einem Unterbruch der Verbindung werden die zwischenzeitlich erfolgten Änderungen der Komponentendaten oder Abfragen zur "Echtheit" der Komponentendaten in das verteilte Register übertragen, sobald wieder eine Verbindung zum Netzwerk NW hergestellt ist.

Der Zugang zu dem verteilten Register kann durch eine vertrauenswürdige Instanz (Authority) verwaltet werden. Jeder Betreiber einer oder mehrerer Automatisierungskomponenten kann dabei Rechenleistung zum Betrieb des Netzwerkes zur Verfügung stellen.

Das verteilte Register kann von einer vertrauenswürdigen Instanz (Authority) verwaltet werden. Bspw. wird hierfür bereits in der Design-Phase der Automatisierungskomponente und später bei der Produktion der Automatisierungskomponente ein Tag, sowie das verteilte Register entsprechend "as-built" und/oder "as-operated" befüllt. Dadurch kann ein Grundzustand des fälschungssicheren digitalen Zwillings herstellt werden. Das Tag bietet eine Integrationsmöglichkeit von nur lesefähigen Tags - über schreib/lese Tags - bis hin zu sich permanent online befindlichen Automatisierungskomponenten in das verteilte Register.

Das verteilte Register kann jede der Automatisierungskomponenten eineindeutig und fälschungssicher über ein Konsensverfahren identifizieren, z.B. indem alle Komponentendaten, bspw. als Blöcke, erzeugt und anschließend an eine Blockchain angehängt werden und somit an allen Knoten (d.h. allen Teilnehmer des Netzwerkes) vorliegen und Änderungen dadurch nachvollziehbar sind. Die Speicherung der neuen Datenblöcke, z.B. aufgrund von Änderungen der Komponentendaten, bauen aufeinander auf und können daher nachträglich nicht ohne Integritätsverlust geändert werden, da diese Veränderung im gesamten verteilten Register durchgeführt werden müsste. Die Rechenleistung, insbesondere zur Berechnung eines neuen Datenblocks, zur Prüfung der Transaktion und/oder zur Durchführung eines Proof-of-Work- oder Proof-of-Stake-Mechanismus, kann einen industriellen PC, wie bspw. einen Programmable Logic Controller (PLC), oder durch ein Schnitt-stellengerät, bspw. ein sog. Edge Device, realisiert werden. Dadurch wird eine Manipulation der Komponentendaten verhindert.

Der digitale Zwilling im verteilten Register kann für die vernetzen Produkte in diesem Netzwerk nicht nur die "as-built" Informationen sondern auch die "as-operated" Informationen zur Verfügung stellen. Die jeweilige Ausprägung kann dabei in Abhängigkeit der zur Verfügung stehenden Rechenleistung des Netzwerks bzw. der Knoten des Netzwerks, des zur Verfügung stehenden Speichers, bspw. im Netzwerk und/oder in dem Tag der Automatisierungskomponente, und/oder der Größe des verarbeitenden Datenvolumens der Komponentendaten gewählt werden.

Von Vorteil ist dabei, dass das Register verteilt, offen und somit herstellerunabhängig ist. Dadurch wird allen Herstellern ermöglicht unabhängig von ihrer Größe Komponentendaten einzubringen oder auch abzufragen. Die Kosten zum Unterhalt des Systems können auf das Netzwerk verteilt werden, so dass keine teuren Betriebskosten in firmeneigenen Rechenzentren notwendig anfallen. Mehrere Nutzer können somit ihre Infrastruktur teilen. Das System ermöglicht ferner die herstellerunabhängige und fälschungssichere Identifikation von Komponentendaten. Die Komponentendaten enthalten nicht nur statische limitierte "as-built" Informationen sondern können auch dynamische "as-operated" Informationen enthalten. Durch die Offenheit des Systems können Komponentendaten erweitert werden. Die Verkettung von Änderungen der Komponentendaten kann kryptografisch abgesicherte werden. Zudem kann ein, bspw. hardware-mäßiges Tag an der Automatisierungskomponente zur Speicherung der Komponentendaten vorgesehen sein.

Änderungen der Komponentendaten können vermittels einer kryptografisch abgesicherten Verkettung einzelner Datenblöcke (Block Ketten Technologie) abgesichert werden. Diese Blöcke können in dem Tag gespeichert werden und/oder von dort abgerufen werden. Das verteilte Register ist dabei vorzugsweise global verfügbar und wird besonders bevorzugt nicht vom Hersteller einer oder mehrere Automatisierungskomponenten gehostet, sondern kann als Basis für eine globale Industrielösung dienen. Durch das verteilte Register können Nutzer Automatisierungskomponenten eineindeutig erkennen. Weitere Vorteile bestehen darin, dass gefälschte Automatisierungskomponenten, instandgesetzte Automatisierungskomponenten, und/oder Änderungen an Automatisierungskomponenten jederzeit nachvollziehbar und verfügbar sind. Dadurch kann das Lagern, das Vorsehen einer Servicedienstleistung, eine Rückrufaktionen, und/oder eine Phase-Out Planung optimiert werden. Zudem sind Komponentendaten einer Automatisierungskomponente "as-operated" verfügbar. Ferner können Informationen zum Betrieb der Automatisierungskomponenten im Feld gesammelt werden. Diese "as-operated" Informationen können als Basis für eine vorrausschauende Wartung dienen. Alle Informationen über Änderungen an der Automatisierungskomponente können über die gesamte Lebensdauer der Automatisierungskomponente erfasst werden. Somit ist die Erstellung von Stücklisten oder auch der Verbleib oder die Einsatzart einer Automatisierungskomponente möglich.

Zur Speicherung der Komponentendaten kann, wie in FIG 5 gezeigt, ein lese- und/oder schreibfähiges Tag K an der Automatisierungskomponente angebracht sein. Diese kann bspw. von einer Bedienperson N, die über ein entsprechendes Bediengerät BG verfügt, ausgelesen und/oder beschrieben werden. Dafür kann bspw. eine Verbindung zum Netzwerk vermittels und über das Bediengerät BG aufgebaut werden. Dafür kann bspw. eine Mobilfunk- oder andere drahtlose Verbindung genutzt werden. Das Lesen und/oder Schreiben von Komponentendaten von bzw. auf die Automatisierungskomponente und/oder auf oder von einem daran angebrachte Tag K kann ebenfalls über eine drahtlose Verbindung erfolgen.

Unter dem verwendeten Begriff Automatisierungskomponente sind alle Typen von Messgeräten und Aktoren zu subsumieren. Als Komponenten werden darüber hinaus auch alle Geräte bezeichnet, die prozessnah eingesetzt werden und die prozessrelevante Informationen liefern oder verarbeiten. Neben den zuvor genannten Messgeräten/Sensoren und/oder Aktoren werden als Komponenten allgemein auch solche Einheiten bezeichnet, die direkt an einem Bus, wie bspw. einem Feldbus, angeschlossen sind und zur Kommunikation mit einer übergeordneten Einheit dienen, wie z.B. Remote I/Os, Gateways, Linking Devices und Wireless Adapter bzw. Funkadapter, programmable logic controller (PLC) etc.

Weitere Ausführungsbeispiele werden in Zusammenhang mit FIG 6 im Folgenden erläutert. Demgemäß können in einem ersten Schritt S1 Komponentendaten in einer Automatisierungskomponente gespeichert werden. Wie bereits ausgeführt, kann dies ab Werk geschehen und/oder in der Designphase der Automatisierungskomponente können der Automatisierungskomponente Komponentendaten zugeordnet werden. Zu diesem Zweck kann ein Tag an oder in der Automatisierungskomponente ein Tag angebracht werden, der diese Automatisierungsdaten enthält. Der Tag ist vorzugsweise derart ausgestaltet, dass die darin gespeicherten Komponentendaten lesbar und/oder schreibbar sind. Zudem können während des Betriebs der Automatisierungskomponente Komponentendaten, bspw. in dem Tag, gespeichert, insbesondere geändert werden. Bei den Komponentendaten kann es sich um statische Daten, wie bspw. eine Herstellerinformation, eine Seriennummer, und/oder eine Stückliste handeln. Bei den Komponentendaten kann es sich ferner um semi-statische Daten, wie bspw. Konfigurierungsparameter, Standort und/oder Firmware-/Softwareversion, der Automatisierungskomponente handeln. Schließlich kann es sich bei den Komponentendaten um dynamische Daten wie bspw. Messwerte oder Zustandswerte, handeln.

Bei den Komponentendaten kann es sich ferner um Daten, die sich auf einen digitalen Zwilling der Automatisierungskomponente beziehen, handeln, welcher digitale Zwilling Zustandsdaten der Automatisierungskomponente enthält, welche Zustandsdaten sich auf einen as-designed-, einen as-planned-, einen as-built-, einen as-installed-, einen as-maintained- und/oder einen as-operated-Zustand der Automatisierungskomponente beziehen. Dabei können as-built Informationen zum Beschreiben oder Darstellen des tatsächlichen Aussehens, Zustandes, der Struktur oder Funktion einer Automatisierungskomponente dienen. Bspw. können bestimmte Aspekte eines Herstellungsprozesses zu Unterschieden zwischen dem theoretischen Modell, das den as-designed Zustand beschreibt, und dem as-Built-Zustand führen. Dabei kann es sich um Toleranzen, Variation des Herstellungsprozesszusammenbaus, Kaltbearbeitung, und/oder Umweltfaktoren wie Temperatur und/oder Vibration. Über den Lebenszyklus einer Automatisierungskomponente hinweg muss ein Hersteller sicherstellen, dass der as-designed Zustand zu jedem Zeitpunkt den gestellten Anforderungen erfüllt und dass die tatsächlich gelieferte Hardware und Software (als "as-built" -Zustand) der genehmigten Konfiguration entspricht. Darüber hinaus können auch Werkzeuge, Vorrichtungen, Lehren, Schablonen, Testgeräte und/oder Software, hinzugefügt werden, um den Erwerb, die Herstellung und/oder Entwicklung einer Automatisierungskomponente zu unterstützen und ihre Verfügbarkeit zur Unterstützung der Produktion zu planen. Wenn diese Aspekte auf einer Herstellungsstückliste ausgeführt werden, ist das Ergebnis eine sog. manufacturing bill of materials (MBOM), oder ein "as-planned" Zustand. Die diese Zustände repräsentierenden Daten sind von erheblicher Vielfalt, denn sie umfassen Informationen über physikalische Parameter, technische Spezifikationen, Layouts und Gerätecodes (in der Spezifikation); Simulationen, Stücklisten, Dokumente und Zeichnungen, (im Design); Herstellungsprozesse und Testverfahren und -ergebnisse (in der Herstellung); Installations- und Sicherheitsverfahren; und Dokumentation (in der Installation); Materialzusammensetzung, Recyclingverfahren; die sich auf den jeweiligen Zustand beziehen, d.h. as-installed, as-maintained und/oder as-operated. Diese Einteilung ist aufgrund der stets zunehmenden Komplexität der möglichen Konfigurationen (KM; englisch configuration management, CM) von Automatisierungskomponenten, insbesondere über deren Lebensdauer von Entwicklung über Herstellung und Betreuung bis hin zur Entsorgung betrachtet, erforderlich, vgl. ISO 10007.

In einem Schritt S2 können die Komponentendaten verschlüsselt bzw. signiert werden, besonders bevorzugt, mit einem der Automatisierungskomponente zugeordneten Schlüssel. Dies kann, wie geschildert, bspw. durch das Erzeugen von Transaktionsdaten erfolgen.

In einem Schritt S3 kann das Speichern von Komponentendaten in Form wenigstens eines Datenblocks erfolgen.

Vorzugsweise werden der Komponentendaten verschlüsselt und/oder signiert, wenn eine Änderung der Komponentendaten erfolgt. Insbesondere können die Komponentendaten in Form eines Datenblocks gespeichert werden, wenn eine Änderung an den Komponentendaten oder zumindest eines Teils der Komponentendaten erfolgt. Dabei werden bspw. eine Änderung, vorzugsweise bestimmte Änderungen, besonders bevorzugt jede Änderung, der Komponentendaten, bspw. in Form eines Datenblocks, an wenigstens einen Teil der Rechenknoten des verteilten Registers übertragen, und/oder in wenigstens einem Teil der Rechenknoten des verteilten Registers gespeichert, und bspw. mit wenigstens einem Datenblock verknüpft wird, der vor der Änderung vorliegende Komponentendaten repräsentiert.

In einem Schritt S4 kann folglich das Übertragen von Komponentendaten an wenigstens einen Teil von Rechenknoten eines verteilten Registers erfolgen. Dabei können mehrere miteinander verbundene Automatisierungskomponenten und/oder wenigstens ein Teil der verbundenen Automatisierungskomponenten und/oder eine oder mehrere Rechenknoten das verteilte Register bilden. Vorzugsweise handelt es sich bei den Komponentendaten um Komponentendaten von Automatisierungskomponenten eines oder mehrerer Hersteller. Ferner handelt es sich bevorzugt auch bei wenigstens einem Teil der das verteilte Register bildenden Rechenknoten um Rechenknoten, die von verschiedenen Herstellern betrieben und unterhalten werden.

In einem Schritt S5 kann eine Authentifizierung der Komponentendaten in dem verteilten Register erfolgen. Dabei kann überprüft werden, ob die empfangenen Komponentendaten konsistent mit einer vorherigen Version der Komponentendaten sind und/oder ob die Komponentendaten echt sind.

In einem Schritt S6 kann sodann(bei erfolgreicher Authentifizierung) das Speichern von Komponentendaten in wenigstens einem Teil der Rechenknoten des verteilten Registers erfolgen. Falls die Authentifizierung nicht erfolgreich ist, werden die an das verteilte Register übertragenen Komponentendaten verworfen.

Geänderte Komponentendaten, anhand denen zumindest ein Teil eines Arbeitsnachweis-Algorithmus (Hash), wie bspw. Proof-of-Work oder Proof-of-Stake, mittels der Komponentendaten durchgeführt wurde, können dann an die wenigstens eine Automatisierungskomponente, vorzugsweise an wenigstens einen Rechenknoten des verteilten Registers, übertragen werden und/oder in einem Rechenknoten des verteilten Registers gespeichert werden. Vorzugsweise werden geänderte Komponentendaten von einem Rechenknoten des verteilten Registers akzeptiert und/oder gespeichert werden, wenn die Komponentendaten zumindest einen Teil eines Arbeitsnachweis-Algorithmus (Hash), wie bspw. Proof-of-Work oder Proof-of-Stake, erfüllen.

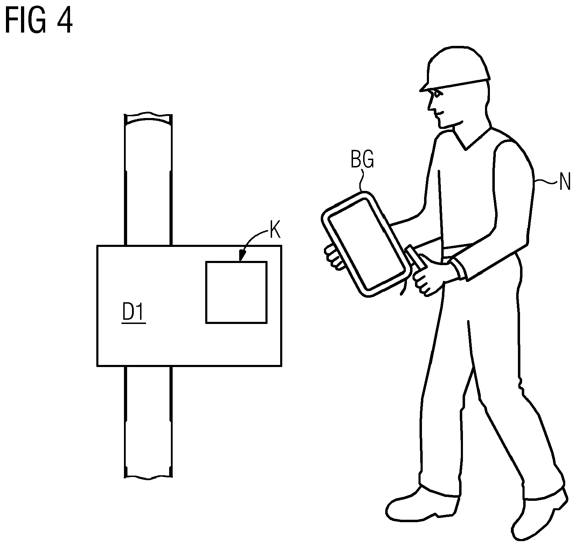

Wie in Zusammenhang mit FIG 4 geschildert, können die geänderten Komponentendaten an wenigstens einen Teil der Rechenknoten des verteilten Registers mittels eines an der Automatisierungskomponente angebrachten Adapters und/oder von einem handhaltbaren Bediengerät zum Auslesen der Komponentendaten übertragen werden. Ferner ist es möglich die Komponentendaten oder geänderte Komponentendaten vermittels eines an der Automatisierungskomponente angebrachten Adapters und/oder vermittels eines handhaltbaren Bediengeräts in der Automatisierungskomponente und/oder einem an der Automatisierungskomponente angebrachten Tag zu speichern. Grundsätzlich können Komponentendaten in allen Knoten des verteilten Registers gespeichert sein. In einem oder mehreren Tags können entsprechende Kopien einer Blockchain ablegt werden. Bspw. können in einer Blockchain zusätzlich Informationen wie z.B. Betriebsdaten "as-operated" gespeichert sein. Möchte man z.B. sicherstellen, dass es sich um eine Originalkomponente handelt, so ist zur Überprüfung nur die Identifikationsinformation der Automatisierungskomponente erforderlich. Möchte man sicherstellen, dass z.B. in einer Automatisierungskomponente weder an der Hardware und/oder der Software etwas verändert wurde, müssen mehr Komponentendaten, bspw. in einem Transaktionsblock erfasst und/oder an eine Blockchain angehängt werden. Ferner können dann in der Automatisierungskomponente oder einem daran angebrachten Tag, die gesamte Blockchain oder wenigstens ein Teil der Blockchain gespeichert sein.

Grundfunktion des Tags kann es also sein, dass Automatisierungskomponente eineindeutig identifizierbar ist. Wenn die Automatisierungskomponente und/oder ein Tag genügend Rechenleistung hat können Sie auch einer der Knoten des Netzwerks bzw. des verteilten Registers bilden.

Einer oder mehrere der vorgenannten Verfahrensschritte können dabei in ihrer Reihenfolge vertauscht oder im Wesentlichen zeitgleich oder zusammen erfolgen.

Ferner ist es möglich ein Computerprogramm bzw. Computerprogramme, die auf einer Automatisierungskomponente bzw. einem Rechenknoten ausführbar sind, vorzusehen, die Programmcodemittel umfassen, die, wenn sie ausgeführt werden, zur Ausführung einer oder mehrere der vorgenannten Verfahrensschritte dienen und insbesondere derart zusammenwirken dass die vorgenannten Verfahrensschritte von einer oder mehreren Automatisierungskomponenten einerseits und einem oder mehreren Rechenknoten andererseits ausgeführt werden.

## Patentansprüche

1. Verfahren zum Sichern von einer Automatisierungskomponente (D1, D2, DN) zugeordneten Komponentendaten,
wobei die Komponentendaten an wenigstens einen Teil von Rechenknoten eines verteilten Registers (BN1, BN2, BN3) übertragen werden, wobei das verteilte Register (BN1, BN2, BN3) zur Authentifizierung der Komponentendaten, vorzugsweise von Komponentendaten mehrerer Automatisierungskomponenten (D1, D2, DN), dient.

2. Verfahren nach dem vorherigen Anspruch,
wobei die Komponentendaten in wenigstens einem Teil der Rechenknoten des verteilten Registers (BN1, BN2, BN3) gespeichert werden.

3. Verfahren nach einem der vorherigen Ansprüche,
wobei die Komponentendaten anfänglich in der Automatisierungskomponente (D1, D2, DN) gespeichert sind und/oder während des Betriebs des Automatisierungskomponente (D1, D2, DN) gespeichert, insbesondere geändert, werden.

4. Verfahren nach einem der vorherigen Ansprüche,
wobei die Komponentendaten verschlüsselt bzw. signiert werden, besonders bevorzugt, mit einem der Automatisierungskomponente (D1, D2, DN) zugeordneten Schlüssel.

5. Verfahren nach einem der vorherigen Ansprüche,
wobei die Komponentendaten in Form wenigstens eines Datenblocks gespeichert und/oder übertragen werden.

6. Verfahren nach einem der vorherigen Ansprüche,
wobei es sich bei den Komponentendaten um einen digitalen Zwilling der Automatisierungskomponente (D1, D2, DN) handelt, welcher digitale Zwilling Zustandsdaten der Automatisierungskomponente (D1, D2, DN) enthält, welche Zustandsdaten sich auf einen as-designed-, einen as-planend-, einen as-built-, einen as-installed-, einen as-maintained- und/oder einen as-operated-Zustand der Automatisierungskomponente (D1, D2, DN) beziehen.

7. Verfahren nach einem der vorherigen Ansprüche,
wobei es sich bei den Komponentendaten um statische Daten, wie bspw. eine Herstellerinformation, eine Seriennummer, und/oder eine Stückliste handelt, und/oder
wobei es sich bei den Komponentendaten um semi-statische Daten, wie bspw. Konfigurierungsparameter, Standort und/oder Firmware-/Softwareversion, der Automatisierungskomponente (D1, D2, DN) handelt, und/oder
wobei es sich bei den Komponentendaten um dynamische Daten wie bspw. Messwerte oder Zustandswerte, handelt.

8. Verfahren nach einem der vorherigen Ansprüche, wobei eine Änderung, vorzugsweise bestimmte Änderungen, besonders bevorzugt jede Änderung, der Komponentendaten, bspw. in Form eines Datenblocks, an wenigstens einen Teil der Rechenknoten des verteilten Registers (BN1, BN2, BN3) übertragen wird,
und/oder in wenigstens einem Teil der Rechenknoten des verteilten Registers (BN1, BN2, BN3) gespeichert wird,
und bspw. mit wenigstens einem Datenblock verknüpft wird, der vor der Änderung vorliegende Komponentendaten repräsentiert.

9. Verfahren nach einem der vorherigen Ansprüche, wobei eine Änderung von Komponentendaten einer Automatisierungskomponente (D1, D2, DN) an alle Rechenknoten des verteilten Registers übertragen wird.

10. Verfahren nach einem der vorherigen Ansprüche,
wobei mehrere Automatisierungskomponenten (D1, D2, DN) mit einander verbunden werden und wenigstens ein Teil der verbundenen Automatisierungskomponenten (D1, D2, DN) und/oder eine oder mehrere Rechenknoten das verteilte Register (BN1, BN2, BN3) bilden.

11. Verfahren nach einem der vorherigen Ansprüche,
wobei die Komponentendaten mehrerer Automatisierungskomponenten (D1, D2, DN) in dem wenigstens einen Teil von Rechenknoten des verteilten Registers (BN1, BN2, BN3) gespeichert werden,
wobei es sich besonders bevorzugt um die Komponentendaten von Automatisierungskomponenten (D1, D2, DN) eines oder mehrerer Hersteller handelt.

12. Verfahren nach einem der vorherigen Ansprüche,
wobei geänderte Komponentendaten von der Automatisierungskomponente (D1, D2, DN), vorzugsweise an wenigstens einen Rechenknoten des verteilten Registers (BN1, BN2, BN3), übertragen werden und/oder in einem Rechenknoten des verteilten Registers (BN1, BN2, BN3) gespeichert werden, wenn zumindest ein Teil eines Arbeitsnachweis-Algorithmus (Hash), wie bspw. Proof-of-Work oder Proof-of-Stake, mittels der Komponentendaten durchgeführt wurde.

13. Verfahren nach einem der vorherigen Ansprüche,
wobei geänderte Komponentendaten von einem Rechenknoten des verteilten Registers akzeptiert und/oder gespeichert werden, wenn die Komponentendaten zumindest einen Teil eines Arbeitsnachweis-Algorithmus, wie bspw. Proof-of-Work oder Proof-of-Stake, erfüllen.

14. Verfahren nach einem der vorherigen Ansprüche,
wobei die geänderten Komponentendaten an wenigstens einen Teil der Rechenknoten des verteilten Registers (BN1, BN2, BN3) mittels eines an der Automatisierungskomponente (D1, D2, DN) angebrachten Adapters und/oder von einem handhaltbaren Bediengerät (BG) zum Auslesen der Komponentendaten übertragen werden.

15. Verfahren nach einem der vorherigen Ansprüche,
wobei die Komponentendaten in einem an der Automatisierungskomponente (D1, D2, DN) angebrachten Speicherelement (K) gespeichert werden.

16. Vorrichtung (A) umfassend wenigstens eine Automatisierungskomponente (D1, D2, DN), wobei der Automatisierungskomponente (D1, D2, DN) Komponentendaten zugeordnet sind und die Vorrichtung dazu ausgelegt ist, die Komponentendaten an wenigstens einen Teil von Rechenknoten eines verteilten Registers (BN1, BN2, BN3) zu übertragen, wobei das verteilte Register zur Authentifizierung der Komponentendaten, vorzugsweise von Komponentendaten mehrerer Automatisierungskomponenten (D1, D2, DN), dient.
